# FASCICULE DE BREVET EUROPEEN

(11) **EP 1 705 060 B1**
(45) Date de publication et mention de la délivrance du brevet: **09.12.2009**
(21) Numéro de dépôt: 06290380.2
(22) Date de dépôt: 07.03.2006
(51) Int. Cl.: B60Q 1/04

(54) **Dispositif d'obturation d'ouverture de boîtier de dispositif d'éclairage pour véhicule automobile**
Kappe zum Verschliessen einer Öffnung einer Kfz-Beleuchtungseinrichtung
Hood for covering an opening of a lighting device housing

(30) Priorité: 22.03.2005 FR 0502846
(43) Date de publication de la demande: 27.09.2006
(73) Titulaire: VALEO VISION, 93012 Bobigny Cedex (FR)
(72) Inventeur: Gomez Ramirez, Manuel c/o Valeo Illuminacion, 23600 Martos Jaen (ES); Vazquez Quesada, Rafael c/o Valeo Illuminacion, 23600 Martos Jaen (ES)
(74) Mandataire: Renous Chan, Véronique

(56) Documents cités:
- EP-A- 0 649 773
- FR-A- 2 092 297
- FR-A- 2 697 318
- FR-A- 2 821 329
- US-A- 3 739 319

## Description

L'invention est relative à un dispositif d'éclairage et/ou de signalisation pour véhicule automobile, du type projecteur. Par soucis de concision, le terme de projecteur sera utilisé dans la suite de ce texte, mais il faut comprendre ce terme au sens large.

L'invention s'intéresse plus particulièrement au mode de fermeture des ouvertures pratiquées dans les boîtiers des projecteurs. En effet, un projecteur comporte usuellement un boîtier fermé à l'avant par une glace, et qui abrite au moins une lampe associée généralement à un réflecteur. Pour avoir accès à l'intérieur du projecteur, notamment pour avoir accès à la lampe et pouvoir ainsi la changer, on prévoit une ou plusieurs ouvertures à l'arrière du boîtier. Pour fermer ces ouvertures, on prévoit des capots ou bonnettes, généralement en matériau polymère, qui doivent répondre à un certain nombre de critères : ils doivent au moins permettre d'assurer l'étanchéité à l'eau du boîtier une fois montés. Ils doivent de préférence être faciles d'utilisation, c'est-à-dire faciles à monter et à démonter. Il est préférable qu'ils procurent à l'utilisateur un confort d'utilisation, notamment qu'il permette à l'opérateur de s'assurer aisément qu'il a bien positionné /fermé de façon étanche le capot ou la bonnette.

Plusieurs systèmes existent : Il est connu du brevet EP 643 256 un capuchon d'obturation en matériau polymère semi-rigide comportant une jupe annulaire apte à s'adapter sur un bossage en saillie radiale disposé sur le pourtour de l'ouverture du boîtier. Il est également connu des capots en matériau polymère rigide, que l'on vient positionner sur le pourtour de l'ouverture puis verrouiller en position grâce à des tiges de métal courbes montées sur le boîtier de façon à pouvoir pivoter selon un axe et ainsi bloquer le capot contre l'ouverture, les tiges étant destinées à se bloquer dans des rainures pratiquées sur le boîtier. Toutefois, ces systèmes ne sont pas dénués d'inconvénients. Dans le premier cas, les bonnettes semi-rigides peuvent ne pas être suffisantes pour passer les cahiers des charges les plus exigeants, notamment si l'ouverture est relativement grande. Dans le second cas, l'utilisation de tiges métalliques nécessite un certain débattement à l'arrière de l'ouverture, pour permettre à celles-ci de pivoter, alors que l'espace entre l'arrière du boîtier et la carrosserie est souvent réduit. Et l'opération de montage/démontage du capot pourrait être plus aisée et confortable : l'opérateur doit exercer un effort pour bloquer/débloquer les tiges, et le risque existe qu'il puisse se pincer les doigts.

Il est également connu du brevet FR 2 092 297 un projecteur comprenant un carter obturé à l'arrière par un capot de matière plastique dans lequel est ménagée une ouverture servant au passage du câble de connexion et obturée par un volet articulé.

L'invention a alors pour but de mettre au point un nouveau système d'obturation des ouvertures des boîtiers de projecteurs, qui soit meilleur. Subsidiairement, l'invention a pour but que ce nouveau système soit notamment plus facile à utiliser et/ou plus sûr, et/ou utilisable même quand l'accessibilité à l'ouverture par l'arrière du projecteur une fois monté dans le véhicule est réduite.

L'invention a alors pour objet un dispositif d'obturation apte à être monté sur une ouverture du boîtier d'un dispositif d'éclairage/signalisation pour véhicule automobile du type projecteur. Ce dispositif comporte un capot rigide sur lequel un volet mobile est apte à coulisser selon une course donnée entre une position dite ouverte et une position dite fermée, ledit volet mobile étant muni de moyens de verrouillage mécanique coopérant quand il est en position fermée avec des moyens complémentaires présents sur le boîtier sur ou à proximité du pourtour de ladite ouverture afin d'assurer le blocage du capot en appui contre le boîtier.

L'avantage principal d'un tel système est sa facilité à être monté/démonté sur le boîtier, et son ergonomie : dans le système précédent évoqué plus haut, on devait faire pivoter des tiges métalliques de façon à ce qu'elles maintiennent le capot en force contre le boîtier. Avec l'invention, l'opérateur n'a pas d'efforts à faire, il lui suffit de faire coulisser une pièce, le volet mobile, contre une autre, le capot rigide. En outre, ce coulissage, cette translation, s'effectue de préférence dans un plan sensiblement parallèle au plan passant par l'ouverture du boîtier à obturer, ce qui veut dire qu'il n'est plus nécessaire d'avoir un débattement important à l'arrière du projecteur, quand il est monté sur le véhicule, pour monter/démonter aisément l'ensemble capot/volet.

Avantageusement, le coulissage du volet mobile est un mouvement de translation, en particulier selon un plan parallèle au plan de l'ouverture du boîtier.

De préférence, les moyens de verrouillage mécanique du volet mobile comportent au moins un ergot apte à coopérer avec au moins une butée présente à proximité de ou sur le pourtour de l'ouverture du boîtier, avec de préférence une ou deux paire d'ergots sur le volet coopérant avec une ou deux paire de butées sur le boîtier. On a ainsi recours à un système de type clipsage, qui assure un grand confort d'utilisation : l'opérateur lors du montage notamment se rend facilement compte s'il a ou non verrouillé correctement le volet, s'il a coulissé suffisamment le volet mobile.

De préférence, le volet mobile présente une poignée de préhension, facilitant le coulissage du volet mobile par rapport au capot rigide.

Avantageusement, le capot rigide est muni sur sa face externe, sur au moins un de ses côtés, de moyens de guidage coopérant avec des moyens de guidage complémentaires disposés sur un côté du volet mobile, de façon à guider le coulissage du volet sur le capot. Il s'agit notamment de rainures de formes complémentaires telles que le seul mouvement possible du volet par rapport au capot est un mouvement de translation selon un axe donné.

Avantageusement, la course du volet mobile par rapport au capot rigide est délimitée dans son débattement par au moins un élément en saillie au bord de la face externe du capot rigide, élément disposé dans au moins une ouverture pratiquée sur un bord correspondant du volet mobile. Le mouvement du volet par rapport au capot est ainsi parfaitement défini/contrôlé. On prévoit de préférence deux éléments coopérant

Selon un mode de réalisation de l'invention, le volet mobile présente un fond sensiblement plan et deux flancs latéraux en saillie radiale par rapport audit fond et disposés le long de deux des côtés opposés dudit fond, des moyens de guidage disposés entre le fond et au moins un des flancs latéraux dudit volet, de type rainures, permettant le coulissage sur des moyens de guidage complémentaires sur le capot rigide. De préférence, le capot présente également une forme comportant un fond sensiblement plan, de façon à ce que le fond du volet puisse épouser la forme du fond du capot contre lequel il est disposé.

Avantageusement, l'extrémité des flancs latéraux du volet mobile présente un ressaut apte à coopérer avec des aménagements en saillie disposés sur ou à proximité du pourtour de l'ouverture du boîtier pour plaquer le volet mobile contre le boîtier. Cela est prévu afin d'éviter que le volet, et donc le capot solidaire de celui-ci, ne se soulève par rapport aux parois du boîtier proches de l'ouverture, une fois le capot positionné sur l'ouverture du boîtier.

De préférence, le capot rigide est muni sur sa face interne d'une jupe délimitant une gorge au fond de laquelle est disposé un joint compressible, notamment surmoulé ou simplement posé. Le montage du capot et du volet est ainsi prévu que l'on positionne le capot sur le boîtier, le volet étant en position ouverte, de façon à ce que la gorge coopère avec un aménagement en saillie radiale prévue sur le boîtier. On vient ensuite faire coulisser le volet mobile par rapport au capot, de façon à clipper les ergots du volet mobile sur des butées prévues sur le boîtier, cette opération de coulissage exerçant une force d'appui sur le capot contre le boîtier, se traduisant par une compression du joint telle que, une fois le volet parvenu en position fermée, le joint est suffisamment comprimé pour assurer l'étanchéité du boîtier au niveau de la jupe du capot, donc à l'interface boîtier/capot.

L'invention concerne également un boîtier pour dispositif d'éclairage/signalisation pour véhicule automobile du type projecteur et comportant au moins une ouverture d'accès fermée par un dispositif d'obturation tel que décrit plus haut.

Le boîtier selon l'invention peut être conçu de la façon suivante :
- le pourtour de l'ouverture du boîtier et le volet mobile sont munis d'aménagements complémentaires de guidage du volet sur le boîtier, du type nervure en saillie axiale coopérant avec un ressaut sur le flanc du volet mobile
- le pourtour de l'ouverture du boîtier et le volet mobile sont munis d'aménagements complémentaires de verrouillage mécanique du volet sur le boîtier, du type clipsage d'ergots dans des butées,
- le pourtour de l'ouverture du boîtier et le capot rigide sont munis d'aménagements complémentaires assurant le maintien étanche du capot contre le boîtier, du type nervure en saillie radiale sur le boîtier coopérant avec une jupe définissant une gorge munie d'un joint sur le capot,
- le capot rigide et le volet mobile sont munis de moyens complémentaires permettant le coulissage du volet contre le capot, du type système de nervures de guidage complémentaires sur au moins un de leurs côtés respectifs.

L'invention concerne également le projecteur dans son ensemble contenant un tel boîtier, et tout véhicule automobile sur lequel est monté un tel projecteur.

L'invention sera détaillée ci-après à l'aide d'un exemple non limitatif illustré par les figures suivantes :
Fig.1 : une vue éclatée d'une portion de boîtier de projecteur muni d'une ouverture et du système d'obturation selon l'invention avec volet mobile et capot rigide
Fig.2a, 2b : une vue de dessus du système d'obturation selon l'invention avec le volet mobile en position ouverte (figure 2a), et en position fermée (figure 2b)
Fig.3 : une section suivant le plan P2 représenté à la figure 1 du système d'obturation, avec le volet en position fermée
Fig. 4 : une section suivant le plan P1 représenté à la figure 1 du système d'obturation selon l'invention
Toutes ces figures sont schématiques et ne respectent pas nécessairement l'échelle entre chacun des composants représentés pour plus de clarté.

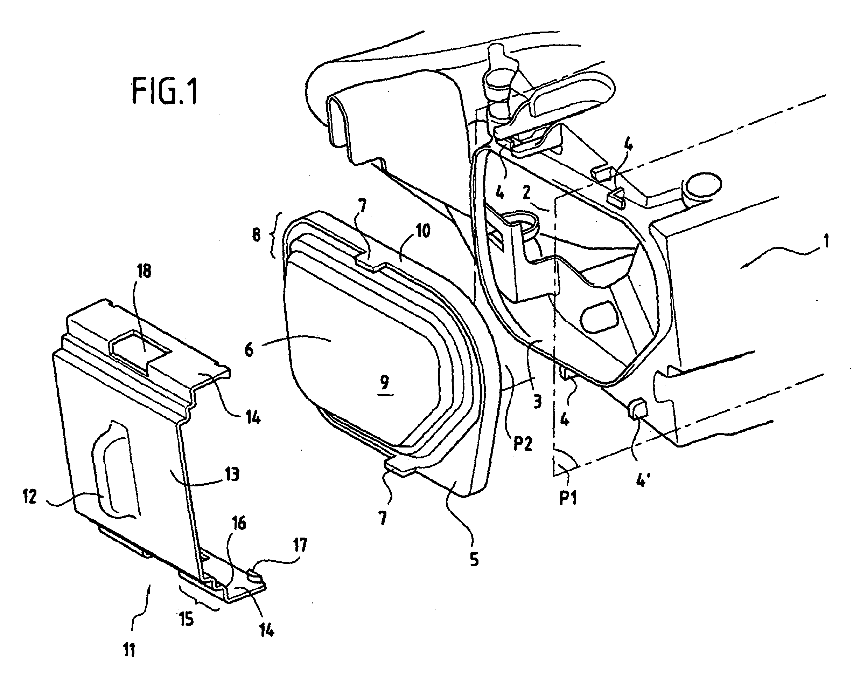

La figure 1 est donc une vue éclatée d'une portion du boîtier d'un projecteur de véhicule automobile associée au système d'obturation selon l'invention. Le boîtier 1 présente une ouverture d'accès 2 de surface d'environ 20 à 30 cm². Cette ouverture est ici utilisée pour avoir accès à une lampe non représentée à l'intérieur du boîtier. La forme de cette ouverture est ici sensiblement rectangulaire aux coins arrondis, avec un des côtés présentant un pan coupé. Mais elle peut prendre toutes autres formes, carrés, rondes ou ovales par exemple, selon la configuration du projecteur. Cette ouverture présente sur son pourtour un aménagement sous forme d'un bossage, d'une saillie 3 s'étendant radialement par rapport à la paroi du boîtier 1. Ce bossage fait par exemple de l'ordre de 2 à 10 mm, et est continu. Le long des deux côtés les plus longs de l'ouverture, ce bossage 3 comporte sur ses flancs extérieurs (« extérieurs » est à comprendre ici comme signifiant qu'il s'agit du côté qui n'est pas tourné vers l'ouverture) trois butées 4. Une quatrième butée 4' est disposée à proximité du bossage 3 mais directement disposé sur le bossage. Elles se trouvent deux à deux opposées. On a ainsi deux butées en haut et deux butées en bas. (« haut « et « bas » se comprennent au vu de la figure 1, qui représente le boîtier dans sa position d'utilisation une fois monté dans la carrosserie d'un véhicule.)

La figure 1 représente aussi le capot rigide 5 : il s'agit d'une pièce en matériau polymère, par exemple en polycarbonate ou en polybutylène téréphtalate. Sa face externe 6 (c'est-à-dire la face qui n'est pas tournée vers l'ouverture 2 une fois monté sur le boîtier 1), la seule visible sur la figure, présente deux éléments en saillie 7, et un ensemble de rainures 8 qui suit sensiblement la forme du pourtour de l'ouverture 2. Le capot 5 est une pièce avec un fond 9 sensiblement plan, qui se prolonge par un rebord 10 continu tout autour du fond 9.

Enfin, la figure 1 représente le volet mobile 11. C'est une pièce symétrique, ce qui permet avantageusement de conserver le même volet qu'il s'agisse de faire un projecteur droit ou un projecteur gauche. Il est également en matériau polymère, et relativement rigide. Sa face externe (ce terme étant employé avec les mêmes conventions que mentionnées plus haut) présente une poignée de préhension 12. Sa forme générale comporte un fond 13 également sensiblement plan définissant une surface rectangulaire, qui se prolonge en deux flancs/rebords 14 sur deux de ses côtés opposés les plus grands. Ces flancs 14 sont orientés sensiblement perpendiculairement au plan du fond 13, et sont reliés audit fond 13 par des zones intermédiaires 15 étagées (ou inclinées) et munies d'un système de rainures 16. Par ailleurs, sur la face interne du volet 11, sont disposés symétriquement deux clips/ergots 17 sur chacun des flancs 14. Sur un des flancs 14 du volet mobile, une ouverture sensiblement rectangulaire 18 est prévue. Une autre ouverture identique est disposée sur le flanc opposé. Ces ouvertures coopèrent avec les éléments en saillie 7.

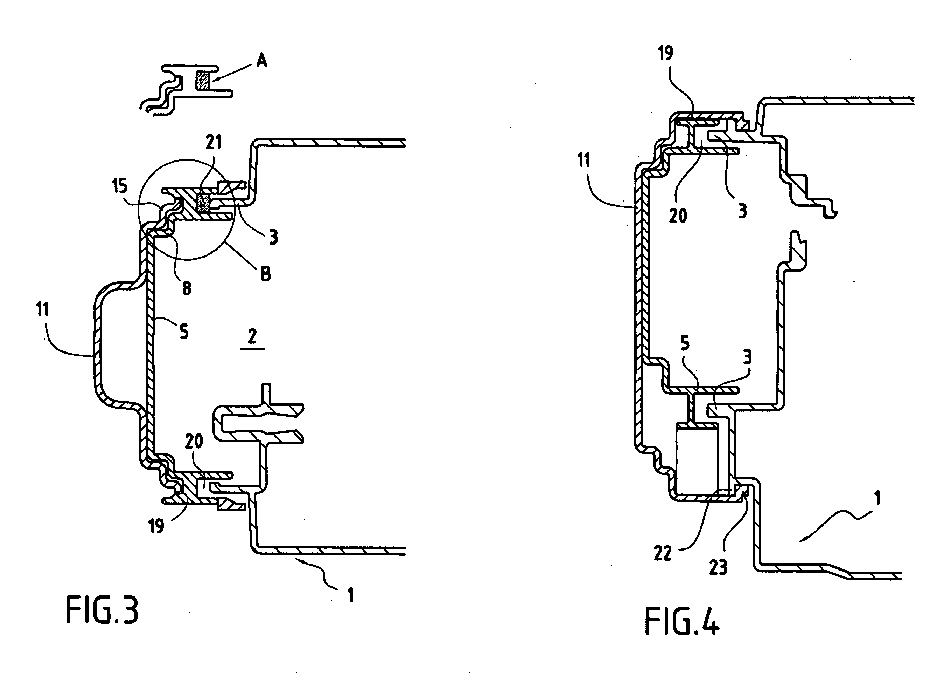

Cette figure permet ainsi d'expliciter la façon dont interagissent certains aménagements complémentaires entre boîtier, capot et volet. Le capot 5 est destiné à obturer l'ouverture 2, le volet mobile est destiné à être monté de façon solidaire sur le capot de façon à coulisser sur le capot :
- les butées 4 disposées sur le boîtier sont destinées à coopérer avec les ergots 17 du volet mobile, de façon à verrouiller en position le volet contre le boîtier,
- les rainures 16 du volet mobile 11 sont destinées à coopérer avec les rainures 8 du capot rigide 5, de façon à ce que le coulissage du volet mobile contre le capot rigide soit guidé,
- le bossage 3 autour de l'ouverture 2 est destiné à être disposé dans une gorge périphérique 20 disposée sur le bord du capot 5, représentée à la figure 3 et à la figure 4,
- les deux éléments en saillie 7 sur le capot rigide sont destinés à être inséré dans les deux ouvertures 18 du volet mobile une fois le volet 11 associé au capot 5.

Les figures suivantes permettent de mieux comprendre comment le montage/démontage du système volet/capot s'opère :

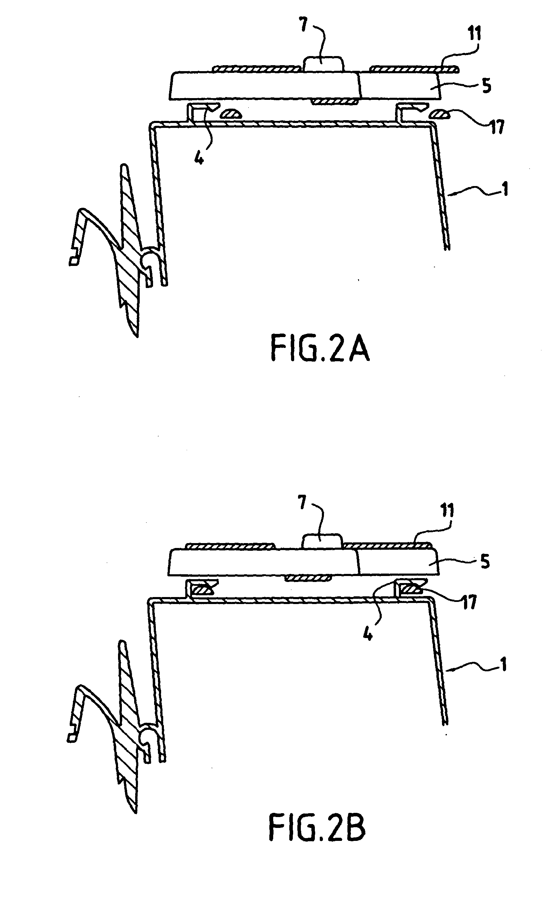

Les figures 2a et 2b représentent une vue simplifiée de dessus du boîtier de la figure 1, une fois le système d'obturation 5,11 placé sur l'ouverture 2.
   - la figure 2a montre la première étape du montage du système volet/capot : on y voit l'ouverture 2 coiffée par le capot 5, avec le volet mobile 11 contre le capot 5 dans sa position « ouverte ». Les ergots 17 du volet ne sont pas encore dans les butées 4.
   - la figure 2b montre le volet en position fermée : les ergots 17 se sont clipsés contre les butées 4,4', effectuant le verrouillage mécanique du volet contre le boîtier, entraînant le verrouillage du capot, monté de façon solidaire avec le volet, contre le boîtier.

La longueur de la course du volet 11 par rapport au capot 5 est définie par le dimensionnement relatif entre l'ouverture 18 du volet mobile par rapport à l'élément en saillie 7 du capot 5.

Les figures 3 et 4 sont des vues simplifiées de sections du boîtier dans la zone d'une ouverture d'accès 2, respectivement selon les plans P2 et P1 représentés à la figure 1.

La figure 3 permet de visualiser la façon dont le capot rigide 5 s'emboîte sur le boîtier 1, elle représente le volet 11 en position fermée. Y est représentée la jupe 19 présente sur le rebord du capot 5, qui définit une gorge 20 dans laquelle est disposé un joint 21, qui est en matériau polymère compressible du type EPDM. La saillie 3 d'orientation radiale par rapport à la paroi arrière du boîtier est présente sur le pourtour de l'ouverture 2, de façon à s'insérer dans la gorge 20 du capot 5. Tant que le volet est en position ouverte, le joint n'est pas comprimé, comme cela est représenté sur le détail A. Quand le volet est translaté vers sa position fermée (détail B), et que le clipsage est réalisé entre ergots et butées, le joint se trouve comprimé : c'est dans cet état comprimé qu'il assure correctement l'étanchéité du boîtier au niveau du capot.

La figure 4 illustre la façon dont le volet mobile, une fois le capot positionné sur l'ouverture 2, ne peut plus se soulever : on voit que la section de l'ouverture présente localement un bossage 22 s'étendant axialement par rapport à la paroi du boîtier, qui coopère avec la forme présentant un ressaut 23 du flanc du volet mobile 11. On a ainsi aussi un guidage du volet par rapport au boîtier quand il coulisse par rapport au capot mobile. Aucune force exercée perpendiculairement au plan de l'ouverture 2 du boîtier ne peut conduire à ce que le volet 11 et le capot 5 s'échappent de l'ouverture, une fois le volet mobile en position fermée.

Le système d'obturation selon l'invention est donc pratique à monter/démonter, ne nécessite aucun effort physique, et rassure l'utilisateur car on réalise un véritable verrouillage mécanique, positif du système contre le boîtier. L'étanchéité est garantie.

En outre, le système d'obturation selon l'invention peut s'adapter aisément à des géométries et des dimensions d'ouverture 2 très différentes, notamment car on peut garder au volet mobile 11 des flancs opposés parallèles entre eux 14 munies de moyens de verrouillage coopérant avec des moyens complémentaires prévus sur le boîtier à proximité et/ou sur le pourtour de l'ouverture quelle que soit la forme de l'ouverture.

## Revendications

1. Dispositif d'obturation (5,11) apte à être monté sur une ouverture (2) du boîtier (1) d'un dispositif d'éclairage/signalisation pour véhicule automobile du type projecteur comportant un capot rigide et un volet mobile, **caractérisé en ce que** ledit volet mobile (11) est apte à coulisser sur ledit capot rigide (5) selon une course donnée entre une position dite ouverte et une position dite fermée, ledit volet mobile (11) étant muni de moyens de verrouillage mécanique (17) aptes à coopérer, quand il est en position fermée, avec des moyens complémentaires (4) présents sur le boîtier (1) sur ou à proximité du pourtour de ladite ouverture (2) afin d'assurer le blocage du capot (5) en appui contre le boîtier (1).

2. Dispositif d'obturation selon la revendication 1, **caractérisé en ce que** le coulissage du volet mobile (11) est un mouvement de translation selon un plan sensiblement parallèle au plan de l'ouverture (2) du boîtier (1).

3. Dispositif d'obturation selon l'une des revendications précédentes, **caractérisé en ce que** les moyens de verrouillage mécanique du volet mobile 11) comportent au moins un ergot (17) apte à coopérer avec une butée (4) présente à proximité de ou sur le pourtour de l'ouverture (2) du boîtier, avec de préférence deux paires d'ergots sur le volet aptes à coopérer avec deux paires de butées sur le boîtier (1).

4. Dispositif d'obturation selon l'une des revendications précédentes, **caractérisé en ce que** le volet mobile (11) présente une poignée de préhension (24), notamment afin de faciliter le coulissage du volet mobile (11) par rapport au capot rigide (5).

5. Dispositif d'obturation selon l'une des revendications précédentes, **caractérisé en ce que** le capot rigide (5) est muni sur sa face externe, sur au moins un de ses côtés, de moyens de guidage (8) coopérant avec des moyens de guidage complémentaires (16) disposés sur un côté du volet mobile (11), de façon à guider le coulissage du volet (11) sur le capot (5).

6. Dispositif d'obturation selon l'une des revendications précédentes **caractérisé en ce que** la course du volet mobile (11) par rapport au capot rigide (5) est délimitée dans son débattement par au moins un élément en saillie (7) au bord de la face externe du capot rigide (5), cet élément étant disposé dans au moins une ouverture (18) pratiquée sur un bord correspondant du volet mobile (11).

7. Dispositif d'obturation selon l'une des revendications précédentes **caractérisé en ce que** le volet mobile (11) présente un fond sensiblement plan (13) et deux flancs latéraux (14) en saillie radiale par rapport audit fond et disposés le long de deux des côtés opposés dudit fond, des moyens de guidage disposés entre le fond et au moins un des flancs latéraux dudit volet, de type rainures (16) , permettant le coulissage sur des moyens de guidage complémentaires (8) sur le capot rigide (5).

8. Dispositif d'obturation selon la revendication précédente **caractérisé en ce que** l'extrémité des flancs latéraux (14) du volet mobile (11) présente un ressaut (23) apte à coopérer avec des aménagements en saillie (22) disposés sur ou à proximité du pourtour de l'ouverture (2) du boîtier (1) pour plaquer le volet mobile (11) contre le boîtier.

9. Dispositif d'obturation selon l'une des revendications précédentes **caractérisé en ce que** le capot rigide (5) est muni sur son pourtour d'une jupe (19) délimitant une gorge (20) au fond de laquelle est disposé un joint compressible (21), notamment surmoulé ou simplement posé.

10. Boîtier (1) pour dispositif d'éclairage/signalisation de véhicules automobiles du type projecteur comportant au moins une ouverture (2) munie d'un dispositif d'obturation amovible (5,11) comportant un capot rigide (5) et un volet mobile, **caractérisé en ce que** ledit volet mobile (11) est apte à coulisser sur ledit capot rigide selon une course donnée entre une position dite ouverte et une position dite fermée, ledit volet mobile étant muni de moyens de verrouillage mécanique (17) coopérant quand il est en position fermée avec des moyens complémentaires (4) présents sur le boîtier (1) sur ou à proximité du pourtour de ladite ouverture (2) afin d'assurer le blocage du capot (5) en appui contre le boîtier (1).

11. Boîtier selon la revendication précédente, **caractérisé en ce que**
- le pourtour de l'ouverture (2) du boîtier et le volet mobile (11) sont munis d'aménagements complémentaires (22,23) de guidage du volet (11) sur le boîtier, du type nervure (22) en saillie axiale coopérant avec un ressaut (23) sur le flanc du volet mobile (11).
- le pourtour de l'ouverture (2) du boîtier et le volet mobile (11) sont munis d'aménagements complémentaires de verrouillage mécanique (17,4) du volet sur le boîtier, du type clipsage d'ergots dans des butées,
- le pourtour de l'ouverture (2) du boîtier et le capot rigide (5) sont munis d'aménagements complémentaires assurant le maintien étanche du capot contre le boîtier, du type nervure (25) en saillie radiale sur le boîtier coopérant avec une jupe (19) définissant une gorge (20) munie d'un joint (21) sur le capot (5),
- le capot rigide (5) et le volet mobile (11) sont munis de moyens complémentaires permettant le coulissage du volet contre le capot, du type système de nervures de guidage complémentaires (8,15) sur au moins un de leurs côtés respectifs.

12. Dispositif d'éclairage/signalisation pour véhicule automobile du type projecteur, **caractérisé en ce qu'**il comporte un boîtier selon l'une des revendications 10 ou 11.

13. Véhicule automobile **caractérisé en ce qu'**il comporte au moins un dispositif d'éclairage selon la revendication précédente.

## Claims

1. Closure device (5, 11) which can be fitted on an opening (2) in the case (1) of a lighting / signalling device of the headlight type, for a motor vehicle, comprising a rigid cover and a mobile shutter, **characterised in that** the said mobile shutter (11) can slide on the said rigid cover (5) according to a given course, between a so-called open position and a so-called closed position, the said mobile shutter (11) being provided with mechanical locking means (17) which can co-operate, when the shutter is in the closed position, with complementary means (4) which are present on the case (1), on or in the vicinity of the periphery of the said opening (2), in order to assure locking of the cover (5) supported against the case (1).

2. Closure device according to claim 1, **characterised in that** the sliding of the mobile shutter (11) is a movement of translation according to a plane substantially parallel to the plane of the opening (2) in the case (1).

3. Closure device according to one of the preceding claims, **characterised in that** the mechanical locking means of the mobile shutter (11) comprise at least one lug (17) which can co-operate with a stop (4) which is present in the vicinity of, or on the periphery of the opening (2) in the case, preferably with two pairs of lugs on the shutter which can co-operate with two pairs of stops on the case (1).

4. Closure device according to one of the preceding claims, **characterised in that the mobile** shutter (11) has a grasping handle (24), in particular in order to facilitate the sliding of the mobile shutter (11) relative to the rigid cover (5).

5. Closure device according to one of the preceding claims, **characterised in that** the rigid cover (5) is provided on its outer surface, on at least one of its sides, with guide means (8) which co-operate with complementary guide means (16) which are provided on one side of the mobile shutter (11), such as to guide the sliding of the shutter (11) on the cover (5).

6. Closure device according to one of the preceding claims, **characterised in that** the course of the mobile shutter (11) relative to the rigid cover (5) is delimited in its clearance by at least one projecting element (7) at the edge of the outer surface of the rigid cover (5), this element being arranged in at least one opening (18) provided in a corresponding edge of the mobile shutter (11).

7. Closure device according to one of the preceding claims, **characterised in that** the mobile shutter (11) has a substantially flat base (13) and two lateral flanks (14) which project radially relative to the said base, and are arranged along two of the opposite sides of the said base, which guide means which are arranged between the base and at least one of the lateral flanks of the said shutter, and are of the groove type (16), thus permitting sliding on complementary guide means (8) on the rigid cover (5).

8. Closure device according the preceding claim, **characterised in that** the end of the lateral flanks (14) of the mobile shutter (11) has a projection (23) which can co-operate with projecting fixtures (22) which are provided on or in the vicinity of the periphery of the opening (2) in the case (1), in order to place the mobile shutter (11) against the case.

9. Closure device according to one of the preceding claims, **characterised in that** the rigid cover (5) is provided on its periphery with a skirt (19) which delimits a groove (20), in the base of which there is arranged a compressible seal (21), which in particular is over-moulded or simply put into place.

10. Case (1) for a lighting / signalling device of the headlight type, for motor vehicles, comprising at least one opening (2) which is provided with a removable closure device (5, 11) comprising a rigid cover (5) and a mobile shutter, **characterised in that** the said mobile shutter (11) can slide on the said rigid cover according to a given course, between a so-called open position and a so-called closed position, the said mobile shutter being provided with mechanical locking means (17) which co-operate, when the shutter is in the closed position, with complementary means (4) which are present on the case (1), on or in the vicinity of the periphery of the said opening (2), in order to assure the locking of the cover (5) supported against the case (1).

11. Case according to the preceding claim, **characterised in that:**
- the periphery of the opening (2) in the case and the mobile shutter (11) are provided with complementary fixtures (22, 23) to guide the shutter (11) on the case, which are of the projecting axial rib type (22), and co-operate with a projection (23) on the flank of the mobile shutter (11);
- the periphery of the opening (2) in the base and the mobile shutter (11) are provided with complementary mechanical fixtures (17, 4) for locking of the shutter on the case, of the type consisting of lugs which clip into stops;
- the periphery of the opening (2) in the case and the rigid cover (5) are provided with complementary fixtures which assure the sealed retention of the cover against the case, and are of the rib type (25), projecting radially on the case and co-operating with a skirt (19) which defines a groove (20) which is provided with a seal (21), on the cover (5); and
- the rigid cover (5) and the mobile shutter (11) are provided with complementary means which permit sliding of the shutter against the cover, of the complementary guide rib system type (8, 15), on at least one of their respective sides.

12. Lighting / signalling device of the headlight type, for a motor vehicle, **characterised in that** it comprises a case according to one of claims 10 or 11.

13. Motor vehicle, **characterised in that** it comprises at least one lighting device according to the preceding claim.

## Patentansprüche

1. Verschlussvorrichtung (5, 11), die auf einer Öffnung (2) des Gehäuses (1) einer Beleuchtungs-/Signalgebungsvorrichtung für Kraftfahrzeuge vom Typ Scheinwerfer mit einer starren Abdeckung und einer beweglichen Klappe angebracht zu werden vermag,
**dadurch gekennzeichnet, dass** die bewegliche Klappe (11) entlang eines gegebenen Wegs zwischen einer sogenannten Offenstellung und einer sogenannten Schließstellung auf der starren Abdeckung (5) zu gleiten vermag, wobei die bewegliche Klappe (11) mit mechanischen Rastmitteln (17) versehen ist, die mit komplementären Mitteln (4), welche auf dem Gehäuse (1) am oder in der Nähe des Umfangrands der Öffnung (2) vorhanden sind, zusammenzuwirken vermögen, wenn sich die Klappe in der Schließstellung befindet, um das Festklemmen der Abdeckung (5) in Anlage am Gehäuse (1) sicherzustellen.

2. Verschlussvorrichtung nach Anspruch 1,
**dadurch gekennzeichnet, dass** das Gleiten der beweglichen Klappe (11) eine Translationsbewegung entlang einer zur Ebene der Öffnung (2) des Gehäuses (1) im Wesentlichen parallelen Ebene ist.

3. Verschlussvorrichtung nach einem der vorhergehenden Ansprüche,
**dadurch gekennzeichnet, dass** die Mittel zum mechanischen Verrasten der beweglichen Klappe (11) wenigstens einen Zapfen (17) aufweisen, der mit einem Anschlag (4) zusammenzuwirken vermag, der am oder in der Nähe des Umfangsrands der Öffnung (2) des Gehäuses vorhanden ist, wobei vorzugsweise zwei Paar Zapfen auf der Klappe mit zwei Paar Anschlägen auf dem Gehäuse (1) zusammenzuwirken vermögen.

4. Verschlussvorrichtung nach einem der vorhergehenden Ansprüche,
**dadurch gekennzeichnet, dass** die bewegliche Klappe (11) einen Griff (24) aufweist, insbesondere um das Verschieben der beweglichen Klappe (11) bezüglich der starren Abdeckung (5) zu erleichtern.

5. Verschlussvorrichtung nach einem der vorhergehenden Ansprüche,
**dadurch gekennzeichnet, dass** die starre Abdeckung (5) auf ihrer Außenseite an wenigstens einer ihrer Seiten mit Führungsmitteln (8) versehen ist, die mit komplementären Führungsmitteln (16) zusammenwirken, die auf einer Seite der beweglichen Klappe (11) vorhanden sind, um das Verschieben der Klappe (11) auf der Abdeckung (5) zu führen.

6. Verschlussvorrichtung nach einem der vorhergehenden Ansprüche,
**dadurch gekennzeichnet, dass** der Verschiebeweg der beweglichen Klappe (11) bezüglich der starren Abdeckung (5) durch wenigstens ein vorstehendes Element (7) am Rand der Außenseite der starren Abdeckung (5) begrenzt ist, wobei dieses Element in wenigstens einer Öffnung (18) angeordnet ist, die auf einem entsprechenden Rand der beweglichen Klappe (11) ausgebildet ist.

7. Verschlussvorrichtung nach einem der vorhergehenden Ansprüche,
**dadurch gekennzeichnet, dass** die bewegliche Klappe (11) einen im Wesentlichen ebenen Boden (13) und zwei Seitenteile (14) aufweist, die bezüglich des Bodens radial vorstehen und entlang der beiden sich gegenüberliegenden Seiten des Bodens angeordnet sind, wobei Führungsmittel vom Typ Rillen (16) zwischen dem Boden und wenigstens einem der Seitenteile der Klappe angeordnet sind, die das Gleiten auf komplementären Führungsmitteln (8) auf der starren Abdeckung (5) erlauben.

8. Verschlussvorrichtung nach einem der vorhergehenden Ansprüche,
**dadurch gekennzeichnet, dass** das Ende der Seitenteile (14) der beweglichen Klappe (11) einen Vorsprung (23) aufweist, der mit vorstehenden Einrichtungen (22) zusammenzuwirken vermag, die am oder in der Nähe des Umfangrands der Öffnung (2) des Gehäuses (1) angeordnet sind, um die bewegliche Klappe (11) gegen das Gehäuse zu drücken.

9. Verschlussvorrichtung nach einem der vorhergehenden Ansprüche,
**dadurch gekennzeichnet, dass** die starre Abdeckung (5) auf ihrem Umfangsrand mit einer Schürze (19) versehen ist, die eine Nut (20) begrenzt, an deren Grund eine komprimierbare Dichtung (21) angeordnet ist, die insbesondere aufgespritzt oder einfach eingelegt ist.

10. Gehäuse (1) für eine Beleuchtungs-/Signalgebungsvorrichtung für Kraftfahrzeuge vom Typ Scheinwerfer, mit wenigstens einer Öffnung (2), die mit einer abnehmbaren Verschlussvorrichtung (5, 11) versehen ist, die eine starre Abdeckung (5) und eine bewegliche Klappe umfasst,
**dadurch gekennzeichnet, dass** die bewegliche Klappe (11) entlang eines gegebenen Wegs zwischen einer sogenannten Offenstellung und einer sogenannten Schließstellung auf der Abdeckung zu gleiten vermag, wobei die bewegliche Klappe mit mechanischen Rastmitteln (17) versehen ist, die mit komplementären Mitteln (4), welche auf dem Gehäuse (1) am oder in der Nähe des Umfangsrands der Öffnung (2) vorhanden sind, zusammenwirken, wenn sich die Klappe in der Schließstellung befindet, um das Festklemmen der Abdeckung (5) in Anlage am Gehäuse (1) sicherzustellen.

11. Gehäuse nach dem vorhergehenden Anspruch,
**dadurch gekennzeichnet, dass**
- der Umfangsrand der Öffnung (2) des Gehäuses und die bewegliche Klappe (11) zum Führen der Klappe (11) auf dem Gehäuse mit komplementären Einrichtungen (22, 23) vom Typ axial vorstehender Rippe (22), die mit einem Vorsprung (23) auf dem Seitenteil der beweglichen Klappe (11) zusammenwirkt, versehen sind,
- der Umfangsrand der Öffnung (2) des Gehäuses und die bewegliche Klappe (11) mit komplementären Einrichtungen (17, 4) zum mechanischen Verrasten der Klappe am Gehäuse vom Typ in Anschlägen verrastender Zapfen versehen sind,
- der Umfangsrand der Öffnung (2) des Gehäuses und die feststehende Abdeckung (5) mit komplementären, den dichten Halt der Abdeckung am Gehäuse gewährleistenden Einrichtungen vom Typ einer am Gehäuse radial vorstehenden Rippe (25), welche mit einer Schürze (19) zusammenwirkt, die auf der Abdeckung (5) eine mit einer Dichtung (21) versehene Nut (20) bildet, versehen sind,
- die starre Abdeckung (5) und die bewegliche Klappe (11) auf wenigstens einer ihrer jeweiligen Seiten mit komplementären, das Gleiten der Klappe auf der Abdeckung ermöglichenden Mitteln vom Typ eines Systems komplementärer Führungsrippen (8, 15) versehen sind.

12. Beleuchtungs-/Signalgebungsvorrichtung für Kraftfahrzeuge vom Typ Scheinwerfer,
**dadurch gekennzeichnet, dass** sie ein Gehäuse nach einem der Ansprüche 10 oder 11 umfasst.

13. Kraftfahrzeug,
**dadurch gekennzeichnet, dass** es wenigstens eine Beleuchtungsvorrichtung nach dem vorhergehenden Anspruch umfasst.
